## Europäisches Patentamt
## European Patent Office
## Office européen des brevets

(11) Numéro de publication: **0 038 492**
**B1**

(12) **FASCICULE DE BREVET EUROPEEN**

(45) Date de publication du fascicule du brevet: **03.10.84**

(21) Numéro de dépôt: **81102752.3**

(22) Date de dépôt: **10.04.81**

(51) Int. Cl.³: **H 02 B 13/02,** F 16 L 23/00, G 01 M 3/28

(54) **Dispositif de contrôle de fuite pour poste blindé à haute tension.**

(30) Priorité: **17.04.80 FR 8008591**
**16.09.80 FR 8019904**

(43) Date de publication de la demande:
**28.10.81 Bulletin 81/43**

(45) Mention de la délivrance du brevet:
**03.10.84 Bulletin 84/40**

(84) Etats contractants désignés:
**BE DE FR GB IT**

(56) Documents cités:
**FR-A- 752 354**
**FR-A- 992 862**
**FR-A-1 370 643**

(73) Titulaire: **ALSTHOM-ATLANTIQUE Société anonyme dite:**
**38, Avenue Kléber**
**F-75784 Paris Cedex 16 (FR)**

(72) Inventeur: **Organi, Henri**
**28, rue Frédéric Fays**
**F-69100 Villeurbanne (FR)**

(74) Mandataire: **Weinmiller, Jürgen et al**
**Zeppelinstrasse 63**
**D-8000 München 80 (DE)**

EP 0 038 492 B1

Courier Press, Leamington Spa, England.

## Description

L'invention est relative à un dispositif de contrôle de fuite pour poste électrique blindé à haute tension sous pression de gaz diélectrique.

Les postes électriques blindés à isolation par un gaz sous pression tel que l'hexafluorure de soufre, doivent présenter une très bonne étanchéité pendant des mois, voire des années sans remplissage complémentaire de gaz. Il est connu, par exemple à partir du document FR—A—992 862, d'utiliser deux joints placés en série sur le trajet de fuite, et de munir la bride d'un trou qui débouche d'une part, à l'extérieur, et d'autre part, dans la zone située entre les deux joints. De plus, il est aussi connu de contrôler la bonne étanchéité du joint placé le plus à l'intérieur par mesure des fuites dans le volume situé entre les deux joints en mesurant les traces de gaz sortant par ce trou. L'orifice tourné vers l'extérieur est normalement fermé de manière étanche par un boulon serrant un joint.

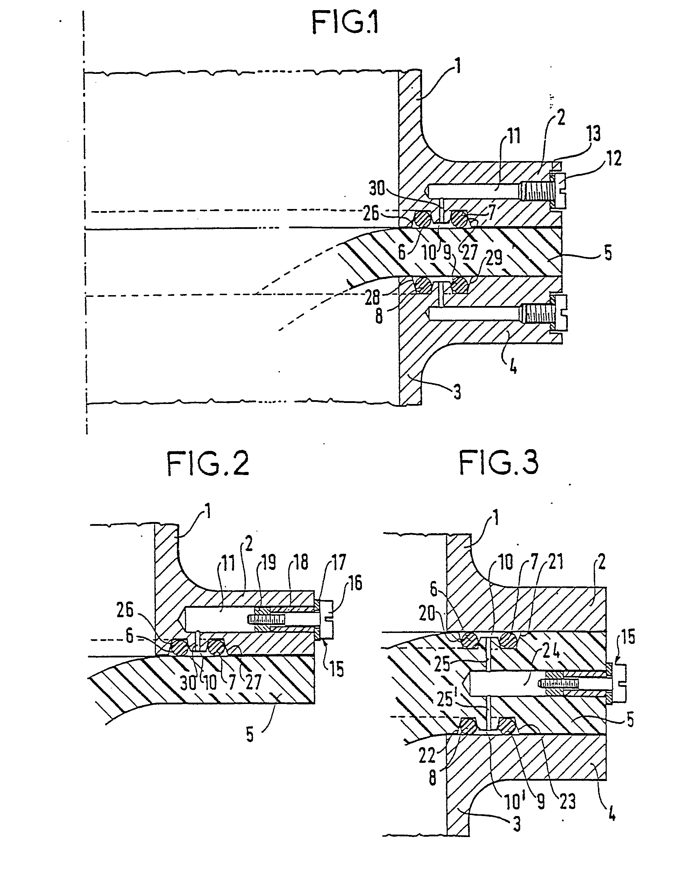

Comme on le voit sur la fig. 1 ci-jointe, qui montre en section un assemblage de brides avec l'interposition d'un isolateur et avec un dispositif selon l'art antérieur pour le contrôle de fuites d'un poste blindé à haute tension, on peut obturer ces trous par une vis 12 et un joint 13, mais cela nécessite un filetage du trou, ce qui constitue une opération coûteuse en fonderie. Il serait donc souhaitable de pouvoir obturer ce trou sans son usinage, c'est-à-dire sans filetage.

Le document FR—A—1 370 643 décrit un dispositif permettant de fermer de façon étanche un trou lisse. Le dispositif est composé de deux pièces, à savoir un bouchon creux et une douille conique. La douille est insérée coaxialement dans le bouchon après mise en place de ce dernier dans le trou. Lors de l'enfoncement de la douille, le bouchon se dilate et développe une force radiale permettant de tenir le bouchon en place. Pour l'extraction du dispositif, on emploit des outils spéciaux, qui coopèrent avec des filetages intérieurs de la douille et du bouchon.

L'invention a pour but de proposer un dispositif de contrôle de fuite entre des brides d'assemblage de viroles d'un poste électrique sous enveloppe métallique remplie de gaz comprimé, à l'aide de deux joints disposés concentriquement en série sur les faces d'assemblage des viroles, le volume interne compris entre les deux joints étant en communication avec l'extérieur par un trou pouvant être obturé par un bouchon, caractérisé par le fait que, le trou étant lisse, le bouchon se compose d'une vis qui présente un filetage seulement sur son extrémité, d'un écrou et d'un joint élastique tubulaire, qui peut être comprimé entre la vis et l'écrou et obture ainsi le trou. En ce qui concerne des modes avantageux de mise en oeuvre de l'invention, référence est faite aux sous-revendications.

L'invention sera décrite ci-après plus en détail à l'aide de plusieurs exemples de réalisation, en référence au dessin ci-après dans lequel:

— la figure 1 est une vue schématique partielle et en coupe d'un assemblage de brides comportant un dispositif de contrôle suivant l'art antérieur.

— la figure 2 est une vue schématique partielle et en coupe d'un assemblage de brides comportant un dispositif de contrôle suivant l'invention.

— la figure 3 est une vue schématique partielle et en coupe d'un assemblage de brides comportant une variante de réalisation du dispositif de contrôle suivant l'invention.

— la figure 4 est une variante de réalisation du dispositif de la figure 3 dans lequel est disposé un joint élastique entaillé;

— la figure 5 est une vue en perspective du joint entaillé visible sur la figure 5;

— la figure 6 est une variante du dispositif de la figure 3 dans lequel le trou lisse est muni d'une entaille;

— la figure 7 est une vue de face du trou entaillé de la figure 6;

— la figure 8 est une vue en coupe d'un outil permettant de détecter lequel des joints fuit;

— la figure 9 est une vue en perspective d'un élément constitutif de l'outil selon la figure 8.

L'assemblage selon l'art antérieur représenté dans la figure 1 comporte des viroles 1 et 3 présentant chacune une bride de fixation 2 et 4. Un isolateur 5 en forme de disque ou de cône est interposé entre les deux brides 2 et 4 qui sont assemblées par des boulons non représentés traversant des perçages de leur périphérie. L'isolateur 5 constitue lui-même une virole intermédiaire entre les brides des viroles 1 et 3. L'étanchéité des brides 2 et 4 est assurée, par deux joints toriques 6, 7 et 8, 9 placés concentriquement en série entre l'intérieur et l'extérieur des viroles et logés dans des gorges 26, 27 et 28, 29 ménagées dans les faces d'assemblage des brides 2 et 4. Les deux gorges telles que 26 et 27 d'une même bride communiquent entre elles créant ainsi entre les joints interne 6 et externe 7 un volume tel que 10.

Pour contrôler une fuite éventuelle du joint 6 qui entraînerait la montée en pression du volume 10, on utilise un trou radial 11 de la bride 2 dans lequel débouche un trou 30 de reprise de fuite sensiblement perpendiculaire mettant le volume 10 en communication avec l'extérieur. En service normal, le trou 11 est fermé de façon étanche par un joint 13 placé sous la tête d'une vis 12 vissée dans un taraudage du trou 11.

Pour effectuer un contrôle d'étanchéité on dévisse la vis 12. Un sifflement indique alors une fuite de gaz depuis le volume 10, donc au niveau du joint 6; on répète l'opération en dévissant l'autre vis.

Dans la figure 2, correspondant au dispositif selon l'invention, on a remplacé la vis 12 et le joint 13 de la figure 1 par un bouchon à cheville 15, ne nécessitant pas de taraudage du trou 11. Le bouchon 15 est constitué d'une vis 16, d'une rondelle 17 d'étanchéité, d'un joint élastique tubulaire 18 d'étanchéité et d'un écrou 19. La vis 16 qui a une tête quelconque, présente une partie filetée seulement sur son extrémité, tandis que la partie près de la tête est lisse pour assurer une étanchéité avec le joint tubulaire 18 au travers duquel elle est enfilée. Le joint tubulaire 18, qui a un diamètre extérieur légèrement inférieur au diamètre du trou 11, est serré entre d'une part la rondelle 17 et d'autre part l'écrou 19.

Pour obturer le trou 11, donc le volume 10 situé entre les deux joints 6 et 7, on introduit l'ensemble du bouchon 15, dans le trou 11, puis on serre la vis 16. Le joint 18, qui est par exemple fait de caoutchouc et qui est comprimé entre l'écrou 19 et la rondelle 17, assure l'étanchéité.

On évitera la rotation de l'écrou 19 par exemple en le collant au joint 18. Le serrage de l'écrou 19 assure une friction suffisante du joint 18 sur les parois du trou pour maintenir l'ensemble en place même si une fuite importante crée une pression de plusieurs bars au niveau de l'écrou 19.

Pour effectuer un contrôle d'étanchéité on dévisse la vis 16. Un sifflement au cours de dévissage indique alors une fuite de gaz depuis le volume 10, donc au niveau du joint 6. Par rapport à l'art antérieur un tel dispositif ne nécessite plus de taraudage dans une bride volumineuse.

La variante de réalisation de la figure 3 tient compte de la présence habituelle d'un isolateur 5 interposé entre les brides.

Les brides 13 ne comportent plus les gorges des figures 1 et 2. Par contre, du fait que l'isolateur 5 est en matériau synthétique moulé, des réserves sont ménagées pour obtenir directement de coulée les gorges 20, 21, 22, 23 et les volumes 10 et 10' par aménagement du moule. Un noyau métallique présentant une légère dépouille permet d'obtenir aussi directement de coulée un trou radial 24. Il suffit ensuite de percer deux trous 25 et 25' de faible diamètre débouchant perpendiculairement dans le trou radial 24 pour mettre en communication les volumes 10 et 10' avec le trou 24. Un bouchon 15 analogue à celui décrit dans la figure 2 permet d'obturer le trou 24.

Dans cette variante de réalisation, il n'y a plus d'usinage de trous radiaux dans les brides. Ils sont remplacés par un trou radial unique et des gorges venues de coulée avec l'isolateur dont l'usinage est limité aux trous de reprises de fuite 25 et 25'.

Si la fuite au niveau du joint défectueux est importante, la pression régnant derrière l'écrou 19 peut atteindre plusieurs bars et il y a un risque, au desserrage de la vis, de projection brutale du bouchon hors de son orifice, ce qui peut être dangereux pour l'opérateur.

Pour éviter ce danger, on crée une fuite de manière à faire diminuer la pression avant la sortie complète du joint élastique.

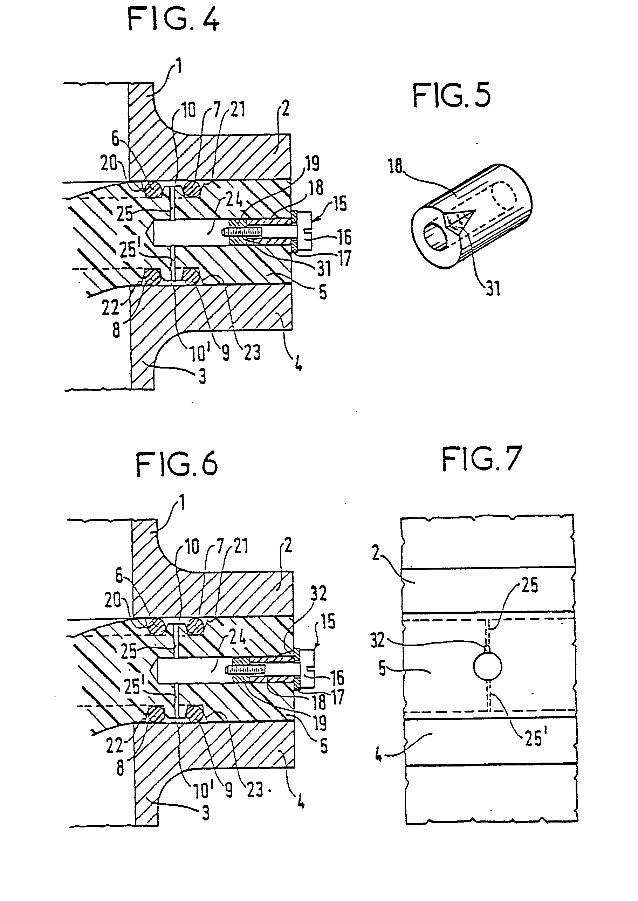

A cet effet, le joint élastique tubulaire présente une encoche 31 sur une partie de sa hauteur (figure 4, 5).

En variante, le trou lisse présente une entaille 32 au voisinage de son extrémité débouchant sur l'extérieur (figure 6, 7).

La figure 4 représente un mode de réalisation du dispositif identique à celui de la figure 3, à la différence près que le joint 18 comporte une entaille 31 à celle de ses extrémités venant en contact avec l'écrou 19.

A titre d'exemple, si la hauteur du joint est de 10 à 15 mm, l'entaille aura une hauteur de 5 mm environ. Plus généralement, la hauteur de l'entaille sera comprise entre la moitié et le tiers de la hauteur du joint avant compression. Lors du serrage de la vis 16, le joint se comprime, et l'entaille se comble. Lors du desserrage de la vis 16, l'entaille s'ouvre, les bords s'écartent, et la pression qui règne derrière le bouchon 15 le pousse, mais après une course du bouchon, la partie supérieure, pointue, de l'entaille, arrive à la sortie du trou 24, le gaz s'échappe ainsi faisant baisser la pression, avant sortie du bouchon qui ainsi n'est pas projeté à l'extérieur.

Le joint, représenté en perspective dans la figure 5, peut être obtenu par moulage, et l'entaille a une forme conique ou pyramidale pour faciliter la compression du joint sans contrainte excessive, la pyramide ayant seulement deux arêtes.

Plus précisément l'entaille résulte de l'intersection du joint cylindrique avec un cône ou une pyramide dont l'axe est en dehors de la section du cylindre du joint.

On obtient le même résultat avec la variante des figures 6 et 7; le joint 18 est cylindrique, et une entaille 32 est fraisée à la partie extérieur du trou 24. Lors du serrage de la vis 16, le joint se comprime, se déforme et occupe partiellement ou totalement l'entaille 32. Au desserrage de la vis 16 le frottement du joint sur les parois est insuffisant pour tenir la pression; le bouchon sort du logement mais quand le fond du joint atteint la partie intérieure de l'entaille 32, le gaz s'échappe par l'entaille alors qu'une partie du joint porte encore sur les parois de 24, il n'y a pas projection du bouchon hors de l'orifice.

L'entaille, dont la hauteur est comprise entre la moitié et le tiers de la hauteur du joint avant compression, peut être obtenue par fraisage ou perçage oblique par rapport au plan de serrage; les bords sont arrondis pour ne pas amorcer la déchirure du joint; on peut utiliser une fraise conique à faible angle au sommet, l'axe de la fraise étant à l'intérieur de la section du trou 24, ce qui conduit à un angle obtus pour l'intersection avec le trou 24.

Le dispositif qui vient d'être décrit dans ses divers modes de réalisation permet lors de l'assemblage en usine ou sur le site de con

trôler économiquement l'étanchéité, ou de déceler la présence d'une fuite; pour cela, on visse la vis 16 à fond puis on dévisse de quelques tours afin d'assurer l'étanchéité tout en ayant un faible frottement du joint 18 sur les parois. Si une fuite existe, la pression s'élevant dans le trou 24 repoussera le bouchon 15 jusqu'à mise à l'atmosphère de 24, le bouchon en saillie sera l'indication d'une fuite. Ceci supprime l'outillage particulier tel que les manomètres à eau pour détecter les fuites.

Bien entendu l'invention s'applique dans le cas où les encoches recevant les joints 6, 7, 8 et 9 sont pratiquées, non dans l'isolateur 5 mais dans les brides 2 et 3 comme il a été décrit en référence au mode de réalisation de la figure 2.

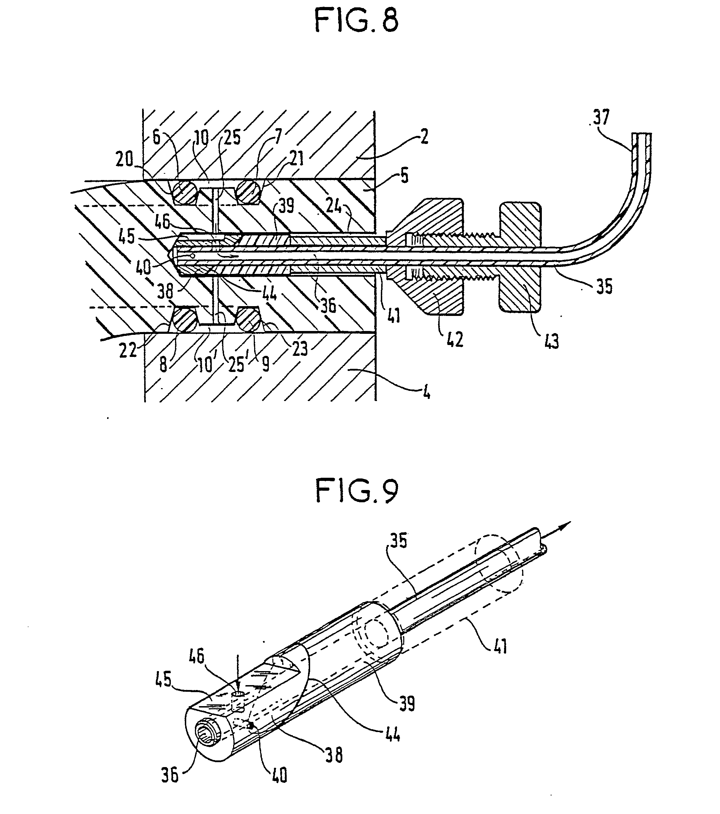

Si on utilise un dispositif avec un seul bouchon pour la détection de fuite au niveau des joints 6 ou 8, la sortie du bouchon décèle la présence d'une fuite mais pour éviter un démontage des viroles 2 et 4, on peut utiliser un outil qui permet de discriminer l'origine de la fuite; cet outil est représenté mis en place dans le trou 24 dans la figure 8 qui reprend en plus grand la figure 4 ou 6.

Cet outil comporte un tube 35 présentant une partie rectiligne 36 et une partie arrondie 37; à l'extrémité de la partie rectiligne 36 du côté de la partie arrondie 37 est fixée par exemple, par brasage, une vis creuse 43 présentant un filetage dirigé vers la partie 36 et une tête avec des pans ou un moletage.

A l'extrémité ouverte de la partie 36 est rapporté et maintenu par une goupille 40, un manchon cylindrique 38 (figure 9) présentant une partie biseautée 44 et à l'opposé du biseau un méplat 45; le biseau présente un angle de 40° environ avec l'axe du tube. Un canal 46 met en communication le méplat 45 et l'intérieur du tube 35.

Dans la figure, le manchon est positionné de manière que le méplat soit en face du trou 25 et le biseau du côté du trou 25'.

Un joint en caoutchouc souple tubulaire 39, de diamètre intérieur très légèrement inférieur au diamètre extérieur du tube 35 et un diamètre extérieur légèrement inférieur à celui du trou 24, présentant un biseau identique à celui du manchon est enfilé sur le tube, de manière a être adjacent au manchon.

Enfin, un tube 41 coulisse librement sur le tube 36 et est entraîné par un écrou moleté 42 faisant office d'organe d'écrasement du joint et se vissant sur la vis creuse 43; il peut comprimer le joint 39.

La partie méplate 45 du manchon 38 a la même orientation que le coude 37 du tube 35, de façon à pouvoir facilement repérer la position du méplat dans le trou 24, donc la présence du joint 39 en face du trou 25 ou 25'.

Ayant décelé une fuite par la sortie du bouchon 15, fuite qui provient des joints entre 2 et 5 et/ou entre 4 et 5, on recherche l'origine de la fuite; pour cela on extrait complètement le bouchon 15, et dans le trou ainsi libéré, on fait pénétrer la partie rectiligne de l'outil décrit plus haut, l'écrou moleté 42 étant vissé libérant le joint 39; l'outil étant maintenu en butée au fond du trou 24 et la partie coudée 37 dirigée vers la virole dont on veut vérifier l'étanchéité; les desserrage de l'écrou 42 fait déplacer de droite à gauche le tube 41 qui comprime le joint 39, celui-ci obture le trou 25' et assure l'étanchéité vis-à-vis de l'extérieur, ainsi seul le gaz provenant du trou 25 peut traverser le tube 35 via la zone laissée libre par le méplat 45; il suffit de brancher la sortie 37 à un manomètre à eau non représenté pour contrôler si la fuite provient du joint 6.

Ensuite l'écrou 42 est tourné pour libérer le joint qui reprend sa place d'origine, l'outil peut alors tourner librement de 180°; le tube 37 est orienté vers la virole 4, la compression du joint 39 obture le trou 25 assure l'étanchéité vers l'extérieur et met en communication le trou 25' avec la manomètre à eau, on contrôle si la fuite provient du joint 8 entre 4 et 5.

Cet outil sert uniquement à déceler l'origine de la fuite.

**Revendications**

1. Dispositif de contrôle de fuite entre des brides d'assemblage de viroles d'un poste électrique sous enveloppe métallique remplie de gaz comprimé, à l'aide de deux joints disposés concentriquement en série sur les faces d'assemblage des viroles, le volume interne (10) compris entre les deux joints (6, 7) étant en communication avec l'extérieur par un trou pouvant être obturé par un bouchon, caractérisé par le fait que, le trou étant lisse, le bouchon se compose d'une vis (16) qui présente un filetage seulement sur son extrémité, d'un écrou (19) et d'un joint élastique tubulaire (18), qui peut être comprimé entre la vis et l'écrou (19) et obture ainsi le trou.

2. Dispositif selon la revendication 1, caractérisé en ce que le trou lisse (11) est ménagé dans la périphérie de l'une des brides (2).

3. Dispositif selon la revendication 1, comportant un isolateur (5) interposé entre les brides (2, 4), caractérisé en ce qu'un trou lisse (24) est ménagé dans la périphérie de l'isolateur et fait communiquer avec l'extérieur les volumes internes (10 et 10') compris entre les joints des faces d'assemblage des brides avec l'isolateur.

4. Dispositif selon la revendication 3, caractérisé en ce que le trou lisse (24) de l'isolateur (5) est obtenu par la présence d'un noyau de moulage lors de la coulée de l'isolateur.

5. Dispositif selon l'une des revendications 3 et 4, caractérisé en ce que les joints d'étanchéité (6, 7, 8, 9) des faces d'assemblage sont disposés dans des gorges (20, 21, 22, 23) ménagées dans l'isolateur (5).

6. Dispositif de contrôle de fuite selon la revendication 1, caractérisé par le fait que l'un au moins des éléments du groupe constitué par le trou lisse (11, 24) et le joint élastique (18) comporte une entaille (31, 32) de manière à créer une fuite au dévissage de la vis (16).

7. Dispositif selon la revendication 6, caractérisé par le fait que l'entaille (31) est pratiquée dans le joint (18) du côté du volume interne (10).

8. Dispositif selon la revendication 7, caractérisé par le fait que la forme de l'entaille (31) est une portion de cône.

9. Dispositif selon la revendication 7, caractérisé par le fait que l'entaille (31) est une portion de pyramide.

10. Dispositif selon la revendication 7, caractérisé par le fait que l'entaille (31) du joint (18) a une hauteur comprise entre le tiers et la moitié de la hauteur du joint (18) avant compression.

11. Dispositif selon la revendication 6, caractérisé par le fait que l'entaille (32) est pratiquée sur l'extrémité du trou (24) située du côté de l'extérieur de l'enveloppe métallique.

12. Dispositif selon la revendication 11, caractérisé par le fait que l'entaille (32) est obtenue par fraisage avec fraise cylindrique en biais les arêtes entre l'entaille et le trou étant tombées.

13. Dispositif selon la revendication 11, caractérisé par le fait que l'entaille (32) est obtenue par fraisage au moyen d'une fraise conique.

14. Dispositif selon la revendication 11, caractérisé par le fait que l'entaille a une hauteur comprise entre la moitié et le tiers de la longueur du joint (18) avant compression de ce dernier.

15. Dispositif de contrôle de fuite selon la revendication 3, permettant de déterminer l'origine de la fuite, caractérisé par le fait qu'il comprend un dispositif (35) pour mettre en communication avec un appareil de mesure de pression l'un des trous (10, 10'), le dispositif (35) comprenant un moyen (39, 42) d'obturation de l'autre canal.

16. Dispositif selon la revendication 15, caractérisé par le fait que l'appareil de mesure communique avec ledit volume à travers un tube 35, ledit moyen d'obturation comportant un joint (39) tubulaire élastique enfilé sur le tube associé à un organe (42) d'écrasement du joint.

17. Dispositif selon la revendication 16, caractérisé par le fait que le joint (39) possède une face terminale biseautée, s'appuyant sur la face biseautée correspondante d'un manchon (38) enfilé sur le tube (35).

18. Dispositif selon la revendication 16, caractérisé par le fait que le manchon (38) présente un méplat (45) muni d'un canal (46) de communication avec l'intérieur du tube (35).

**Patentansprüche**

1. Vorrichtung zur Kontrolle des Lecks zwischen den Montage-Ringflanschen einer elektrischen Anlage, die sich in einer mit komprimiertem Gas gefüllten Metallhülle befindet, mithilfe zweier Dichtungen, die konzentrisch in Serie auf den Montageflächen der Flanschringe angeordnet sind, wobei das innere Volumen (10) zwischen den beiden Dichtungen (6, 7) mit der Außenwelt über ein Loch in Verbindung steht, das durch einen Stopfen verschlossen werden kann, dadurch gekennzeichnet, daß der Stopfen aus einer Schraube (16), die nur an ihrem Ende ein Gewinde aufweist, einer Mutter (19) und einer rohrförmigen elastischen Dichtung (18) besteht, die zwischen der Schraube und der Mutter komprimiert werden kann und so das Loch, das glatte Wände besitzt, verschließt.

2. Vorrichtung nach Anspruch 1, dadurch gekennzeichnet, daß das glatte Loch (11) im Umfang eines der Flansche (2) vorgesehen ist.

3. Vorrichtung nach Anspruch 1, die einen zwischen den Flanschen (2, 4) angeordneten Isolator (5) aufweist, dadurch gekennzeichnet, daß ein glattes Loch (24) im Umfang des Isolators vorgesehen ist, das die inneren Volumen (10, 10') zwischen den Dichtungen der Montageflächen der Flansche mit dem Isolator mit der Außenwelt verbindet.

4. Vorrichtung nach Anspruch 3, dadurch gekennzeichnet, daß das glatte Loch (24) des Isolators (5) dadurch erhalten wird, daß ein Gießkern während des Gießens des Isolators vorhanden ist.

5. Vorrichtung nach einem der Ansprüche 3 und 4, dadurch gekennzeichnet, daß die Dichtungen (6, 7, 8, 9) der Montageflächen in Kehlen (20, 21, 22, 23) angeordnet sind, die in den Isolator (5) eingeschnitten sind.

6. Leck-Kontrollvorrichtung nach Anspruch 1, dadurch gekennzeichnet, daß mindestens eines der Elemente der aus dem glatten Loch (11, 24) und der elastischen Dichtung (18) bestehenden Gruppe eine Kerbe (31, 32) aufweist, wodurch ein Leck beim Aufschrauben der Schraube (16) entsteht.

7. Vorrichtung nach Anspruch 6, dadurch gekennzeichnet, daß die Kerbe (31) in die Dichtung (18) auf der Seite des inneren Volumens (10) eingeschnitten ist.

8. Vorrichtung nach Anspruch 7, dadurch gekennzeichnet, daß die Kerbe (31) die Form eines Konusabschnitts besitzt.

9. Vorrichtung nach Anspruch 7, dadurch gekennzeichnet, daß die Kerbe (31) die Form eines Pyramidenabschnitts besitzt.

10. Vorrichtung nach Anspruch 7, dadurch gekennzeichnet, daß die Kerbe (31) der Dichtung (18) eine Höhe aufweist, die zwischen einem Drittel und der Hälfte der Höhe der Dichtung (18) vor der Komprimierung liegt.

11. Vorrichtung nach Anspruch 6, dadurch gekennzeichnet, daß die Kerbe (32) in das Ende des Lochs (24), das auf der Außenseite der Metallhülle liegt, eingeschnitten ist.

12. Vorrichtung nach Anspruch 11, dadurch gekennzeichnet, daß die Kerbe (32) durch schräges Ausfräsen mit einem zylindrischen Fräser erhalten wird, wobei die Kanten zwischen der Kerbe und dem Loch entfernt sind.

13. Vorrichtung nach Anspruch 11, dadurch gekennzeichnet, daß die Kerbe (32) durch Fräsen mit einem konischen Fräser erhalten wird.

14. Vorrichtung nach Anspruch 11, dadurch gekennzeichnet, daß die Kerbe eine Höhe aufweist, die zwischen der Hälfte und dem Drittel der Länge der Dichtung (18) vor ihrer Komprimierung liegt.

15. Leck-Kontrollvorrichtung nach Anspruch 3, die die Bestimmung des Ursprungs des Lecks ermöglicht, dadurch gekennzeichnet, daß sie eine Vorrichtung (35) aufweist, mit der eines der Löcher (10, 10') mit einem Druckmeßgerät in Verbindung gesetzt wird, wobei die Vorrichtung (35) ein Mittel (39, 42) zum Verschließen des anderen Kanals aufweist.

16. Vorrichtung nach Anspruch 15, dadurch gekennzeichnet, daß das Meßgerät mit dem Volumen über ein Rohr 35 in Verbindung steht, wobei das Verschlußmittel eine elastische Ringdichtung (39) aufweist, die auf das Rohr aufgesteckt ist und einem Organ (42) zum Zerquetschen der Dichtung zugeordnet ist.

17. Vorrichtung nach Anspruch 16, dadurch gekennzeichnet, daß die Dichtung (39) eine abgeschrägte Endfläche aufweist, die auf der entsprechenden abgeschrägten Seite einer Muffe (38) aufliegt, die auf das Rohr (35) aufgeschoben ist.

18. Vorrichtung nach Anspruch 16, dadurch gekennzeichnet, daß die Muffe (38) eine Abflachung (45) aufweist, die mit einem in das Innere des Rohrs (35) führenden Kanal (46) ausgestattet ist.

**Claims**

1. A leak checking device between the assembly flanges of collars of an electric switchgear, which is cladded by a metal casing and filled with compressed gas, by means of two seals disposed concentrically in series on the assembly surfaces of the collars, the internal volume (10) comprised between the two seals (6, 7) being in communication with the outside via a hole which can be obturated by a plug, characterized in that, the hole being smooth, the plug is constituted by a screw (16) which is threaded only on its end portion, a nut (19) and a resilient tubular seal (18) which can be compressed between the screw and the nut (19) and thus obturates the hole.

2. A device according to claim 1, characterized in that the smooth hole (11) is provided in the periphery of one of the flanges (2).

3. A device according to claim 1, comprising an insulator (5) which is inserted between the flanges (2, 4), characterized in that a smooth hole (24) is provided in the periphery of the insulator which makes the internal volumes (10, 10') comprised between the seals of the assembly surfaces of the flanges with the insulator communicate with the outside.

4. A device according to claim 3, characterized in that the smooth hole (24) of the insulator (5) is obtained by the presence of a moulding core during the casting of the insulator.

5. A device according to one of the claims 3 and 4, characterized in that the seals (6, 7, 8, 9) of the assembly surfaces are disposed in grooves (20, 21, 22, 23) formed in the insulator (5).

6. A leak checking device according to claim 1, characterized in that at least one of the elements of the group constituted by the smooth hole (11, 24) and the resilient seal (18) comprises a notch (31, 32) so that a leak is created when the screw (16) is loosened.

7. A device according to claim 6, characterized in that the notch (31) is formed in the seal (18) on the side of the internal volume (10).

8. A device according to claim 7, characterized in that the shape of the notch (31) is a portion of a cone.

9. A device according to claim 7, characterized in that the shape of the notch (31) is a portion of a pyramid.

10. A device according to claim 7, characterized in that the notch (31) of the seal (18) has a height comprised between the third part and half of the height of the seal (18) before compression.

11. A device according to claim 6, characterized in that the notch (32) is formed on that end of the hole (24) which is situated on the outside of the metal cover.

12. A device according to claim 11, characterized in that the notch (32) is obtained by obliquely milling with a cylindrical mill, the ridges between the notch and the hole being machined away.

13. A device according to claim 11, characterized in that the notch (32) is obtained by milling with a conical mill.

14. A device according to claim 11, characterized in that the notch has a height comprised between one half and one third of the length of the seal (18) before compression of the latter.

15. A leak checking device according to claim 3, permitting to determine the origin of the leak, characterized in that it comprises a means (35) for making one of the holes (10, 10') communicate with an apparatus for measuring the pressure, the means (35) comprising a means (39, 42) for obturating the other channel.

16. A device according to claim 15, characterized in that the measuring apparatus communicates with said volume through a tube 35, said obturating means comprising a resilient tubular seal (39) slipped on the tube and associated to a unit (42) for squeezing the seal.

17. A device according to claim 16, characterized in that the seal (39) possesses a bevelled end face applied against the corresponding bevelled face of a sleeve (38) slipped on the tube (35).

18. A device according to claim 16, characterized in that the sleeve (38) presents a flat zone (45) provided with a channel (46) which communicates with the interior of the tube (35).

0 038 492

FIG.1

FIG.2

FIG.3

# FIG. 4

# FIG. 5

# FIG. 6

# FIG. 7

# FIG. 8

# FIG. 9